# EUROPÄISCHE PATENTSCHRIFT

(11) **EP 1 529 171 B1**
(45) Veröffentlichungstag und Bekanntmachung des Hinweises auf die Patenterteilung: **12.09.2012**
(21) Anmeldenummer: 03792187.1
(22) Anmeldetag: 09.07.2003
(51) Int. Cl.: F16D 3/227

(54) **VERSCHIEBEGELENK**
SLIDING ARTICULATION
ARTICULATION COULISSANTE

(30) Priorität: 14.08.2002 DE 10237169
(43) Veröffentlichungstag der Anmeldung: 11.05.2005
(73) Patentinhaber: Shaft-Form-Engineering GmbH, 77756 Hausach (DE)
(72) Erfinder: JACOB, Werner, 60599 Frankfurt am Main (DE); JACOB, Martin, D., 38114 Braunschweig (DE)
(74) Vertreter: KEIL & SCHAAFHAUSEN Patentanwälte
(86) Internationale Anmeldenummer: PCT/EP2003/007387
(87) Internationale Veröffentlichungsnummer: WO 2004/018888

(56) Entgegenhaltungen:
- US-A- 3 452 558
- US-A- 3 656 318
- US-A- 4 357 810
- US-A- 4 573 947
- US-A- 5 026 325
- US-A- 5 692 961
- US-A1- 2001 049 309

## Beschreibung

Die Erfindung betrifft ein Verschiebegelenk, wie es bspw. in Gelenkwellen von Kraftfahrzeugen oder dgl. einsetzbar ist, mit einer Außennabe, die einen Hohlraum umschließt und in ihrer Innenfläche Kugelbahnen aufweist, die sich parallel zu der Achse des Verschiebegelenks erstrecken, eine in dem Hohlraum aufgenommenen Innennabe, die auf ihrer Außenfläche sich parallel zu der Achse des Verschiebegelenks erstreckende Kugelbahnen aufweist, welche den Kugelbahnen der Außennabe gegenüberliegen und gemeinsam mit diesen paarweise jeweils eine Kugel aufnehmen, und mit einem zwischen der Außennabe und der Innennabe angeordneten Käfig, der die Kugeln in axialer Richtung führt.

In Gelenkwellen, die bspw. als Längs- oder Seitenwellen in Kraftfahrzeugen zur Übermittlung eines Antriebsdrehmoments vom Getriebe an die Antriebsräder verwendet werden, ist es üblich, eine Längenänderung der Welle zu Montagezwecken oder zum Ausgleich von axialen Bewegungen während des Betriebs zu ermöglichen. In der DE 199 11 111 C1 wird bspw. eine Anordnung mit einem Gleichlauffestgelenk vorgeschlagen, die einen Schiebezapfen und eine diesen umgreifenden Schiebehülsenabschnitt aufweist, die beide einander zugeordnet Rillen zur Aufnahme von Kugeln aufweisen. Durch diese Kugeln ist der Schiebezapfen drehfest mit dem Schiebehülsenabschnitt verbunden, während eine axiale Bewegung des Schiebezapfens relativ zu dem Schiebehülsenabschnitt möglich ist. Der für eine derartige Anordnung erforderliche Bauraum ist jedoch durch die Trennung des Gelenks von der Verschiebeeinheit groß.

Aus der DE-PS 2 114 536 ist ein Gelenk der eingangs genannten Art bekannt, das als Gleichlaufgelenk den Ausgleich von Beugewinkeln zweier Wellenenden ermöglicht und gleichzeitig als Verschiebegelenk eine axiale Abstandsänderung der Wellenenden zueinander ermöglicht. Der Käfig dieses Gelenks ist mit einer äußeren Kugelfläche versehen, die in einer inneren Kugelfläche der Außennabe geführt ist, so dass der Käfig in axialer Richtung in der Außennabe gehalten ist. Dadurch ist eine Bewegung der in den Kugelbahnen aufgenommenen Kugeln relativ zu der Außennabe nicht möglich, so dass die Kugeln in den Kugelbahnen nicht abrollen können, sondern eine Relativbewegung zwischen der Außennabe und der Innennabe nur durch ein Verschieben der Kugeln in den Kugelbahnen der Innennabe möglich ist. Das Verschieben der Kugeln in den Kugelbahnen führt zu hohen Reibmomenten in dem Gelenk, die eine Erwärmung im Betrieb und rascheren Verschleiß mit sich bringen.

Die US 3,452,558 schlägt ein Verschiebegelenk vor, bei welchem der Käfig entweder auf der Innennabe befestigt oder über eine Steuerfläche schwenkbar und in axialer Richtung nicht beweglich geführt wird.

Aus der US 2001/0049309 A1 ist ein Gelenk der eingangs genannten Art mit einem äußeren Käfig und einem Zwischenkäfig bekannt, die mittels korrespondierender Anschlags- bzw. Führungsflächen an einer relativen axialen Bewegung zueinander gehindert werden. Zudem ist die axiale Bewegung des Zwischenkäfigs zu der Innennabe durch aneinander anschlagende Schultern begrenzt. Dies erfordert einen erhöhten Fertigungsaufwand und kann die Dauerhaltbarkeit des Käfigs beeinträchtigen.

Aufgabe der Erfindung ist es daher, ein Verschiebegelenk der eingangs genannten Art bereitzustellen, bei welchem die Reibung im Betrieb verringert wird, welches jedoch gleichzeitig die zur Montage erforderliche Relativbewegung der Innennabe zur Außennabe ermöglicht.

Diese Aufgabe wird erfindungsgemäß mit einem Gelenk nach Anspruch 1 gelöst. Hierbei ist die Innennabe relativ zu der Außennabe in axialer Richtung um eine erste Strecke durch Abrollen der Kugeln in den Kugelbahnen zwischen einem ersten Anschlag und einem zweiten Anschlag frei verschiebbar und um eine weitere Strecke durch Gleiten der Kugeln in den Kugelbahnen verschiebbar. In einem definierten Bereich, der von zwei Anschlägen begrenzt wird, können die Kugeln somit in den Kugelbahnen rollen, um eine Axialbewegung zwischen der Innennabe und der Außennabe zu ermöglichen. Der Käfig ist relativ zu der Innennabe und relativ zu der Außennabe in axialer Richtung frei verschiebbar. Durch das Abrollen der Kugeln in den Kugelbahnen tritt lediglich ein gegenüber dem Verschieben der Kugeln in den Kugelbahnen vernachlässigbarer Reibverlust auf. Die Strecke, die die Kugeln in den Kugelbahnen rollen können, wird durch Anschlagen der Kugeln in den Kugelbahnen an den ersten Anschlag und den zweiten Anschlag begrenzt. Diese Strecke ist dabei so ausgelegt, dass sie die im Betrieb üblicherweise auftretenden axialen Verschiebungen der Innennabe zu der Außennabe aufnehmen kann. Wird bspw. während der Montage eine weitergehende Verschiebung der Innennabe zu der Außennabe erforderlich, so können die Kugeln in den Kugelbahnen zusätzlich zu der ersten Strecke, in der die Kugeln in den Kugelbahnen abrollen, um eine weitere Strecke in den Kugelbahnen gleitend verschoben werden. Die hierbei auftretenden Reibverluste führen bei einem einmaligen Verschieben während der Montage jedoch nicht zu erhöhtem Verschleiß oder einer Erwärmung des Gelenks.

Da der Käfig relativ zu der Innennabe und relativ zu der Außennabe in axialer Richtung frei verschiebbar ist, wird sichergestellt, dass auch die Kugeln in den Kugelbahnen durch den Käfig nicht am Abrollen gehindert werden und zusätzliche Reibverluste zwischen dem Käfig und den Kugeln auftreten.

Nach einer Ausführungsform der Erfindung ist der Käfig auf der Innennabe geführt. Dies kann bspw. dadurch erreicht werden, dass der Käfig ein Faltkäfig mit in die Kugelbahnen der Innennabe eingreifenden Käfigführungsstegen ist. Weiter kann der Käfig auch als Faltkäfig mit Käfigführungsstegen versehen sein, welche in Zentrierungsnuten der Innennabe eingreifen, die in den Stegen zwischen den Kugelbahnen ausgebildet sind.

Alternativ hierzu ist es möglich, dass der Käfig auf der Außennabe geführt ist, bspw. indem der Käfig radial nach außen wegragende Käfigführungsstege aufweist, welche in Zentrierungsnuten der Außennabe eingreifen, die in den Stegen zwischen den Kugelbahnen ausgebildet sind.

Eine besonders wirtschaftliche Herstellung des erfindungsgemäßen Schiebegelenks ist dann möglich, wenn die Außennabe ein Blechumformteil ist, in der die Kugelbahnen spanlos eingebracht sind. Auf diese Weise wird zudem das Gewicht des Gelenks reduziert, so dass die durch das Gelenk erzeugten Fliehkräfte und die dadurch verursachten Vibrationen im Betrieb gering gehalten werden können.

Nach einer bevorzugten Ausführungsform der Erfindung weist die Innennabe eine zentrale Bohrung mit einer Steckverzahnung auf. Bei dieser Ausgestaltung der Innennabe kann das Verschiebegelenk auf einen entsprechend konturierten Wellenzapfen aufgeschoben werden, um eine drehfeste Verbindung zwischen dem Wellenzapfen und der Innennabe sowie eine Zentrierung des Verschiebegelenks herzustellen. Dabei ist eine Zentrierung des Verschiebegelenks über die Innennabe von besonderem Vorteil, da bei gleichen Toleranzen gegenüber einer Zentrierung bspw. mittels eines Flansches an der Außennabe geringere Unwuchtung auftreten, wodurch im Betrieb kleinere Fliehkräfte und damit weniger Vibrationen und Geräusche erzeugt werden.

Die erste Strecke, in der die Kugeln in den Kugelbahnen rollen, wird erfindungsgemäß durch zwei Anschläge begrenzt, welche durch die Enden der Kugelbahnen der Außennabe gebildet werden können. Alternativ oder zusätzlich kann diese erste Strecke, in welcher die Kugeln in den Kugelbahnen rollen können, durch einen oder mehrere in die Kugelbahnen der Innennabe eingesetzte Sprengringe als Anschläge begrenzt werden.

Die Erfindung wird nachfolgend anhand von Ausführungsbeispielen und unter Bezugnahme auf die Zeichnung näher erläutert.

Es zeigen:
- Fig. 1: eine Schnittansicht des Verschiebegelenks nach einer ersten Ausführungsform,
- Fig. 2: einen Schnitt durch das Verschiebegelenk nach Fig. 1 entlang der Linie II-II,
- Fig. 3: eine Schnittansicht eines Verschiebegelenks nach einer zweiten Ausführungsform,
- Fig. 4: einen Schnitt durch das Verschiebegelenk nach Fig. 3 entlang der Linie IV-IV,
- Fig. 5: eine Schnittansicht eines Verschiebegelenks nach einer weiteren Ausführungsform,
- Fig. 6: eine vergrößerte Detailansicht eines Verschiebegelenks nach einer weiteren Ausführungsform,
- Fig. 7: ausschnittweise eine Schnittansicht durch das Verschiebegelenk von Fig. 5 entlang der Linie VII-VII. s

In den Figuren ist ein Verschiebegelenk 1 mit einer im Wesentlichen zylindrischen Außennabe 2, einer in dem von der Außennabe 2 definierten Hohlraum aufgenommenen Innennabe 3 und einem Käfig 4 dargestellt, der zwischen der Außennabe 2 und der Innennabe 3 geführt ist. Der Käfig 4 weist dabei neun Fenster 5 auf, die im gleichmäßigen Abstand am Umfang des Käfigs 4 verteilt sind, und in denen jeweils eine Kugel 6 aufgenommen ist.

In der Außennabe 2 sind den Fenstern 5 des Käfigs 4 entsprechend neun Kugelbahnen 7 ausgebildet, welche sich im Wesentlichen parallel zu der Achse A₂ des Verschiebegelenks 1 erstrecken. Die Kugelbahnen 7 werden dabei auf der einen Seite durch einen Absatz 8 der Außennabe 2 und auf der anderen Seite durch einen Begrenzungsanschlag 9 begrenzt, der von einem an der Außennabe 2 befestigten Faltenbalgträger 10 gebildet wird.

Auch in der Innennabe 3 sind neun Kugelbahnen 11 ausgebildet, die parallel zu der Achse A₃ der Innennabe 3 verlaufen, welche bei einer Zentrierung der Innennabe 3 in der Außennabe 2 mit deren Achse A₂ als Gelenkachse zusammenfällt. Die Kugeln 6 sind dabei in den einander paarweise zugeordneten Kugelbahnen 7 und 11 der Außennabe 2 und der Innennabe 3 aufgenommen, so dass die Außennabe 2 drehfest aber axial verschiebbar mit der Innennabe 3 verbunden ist.

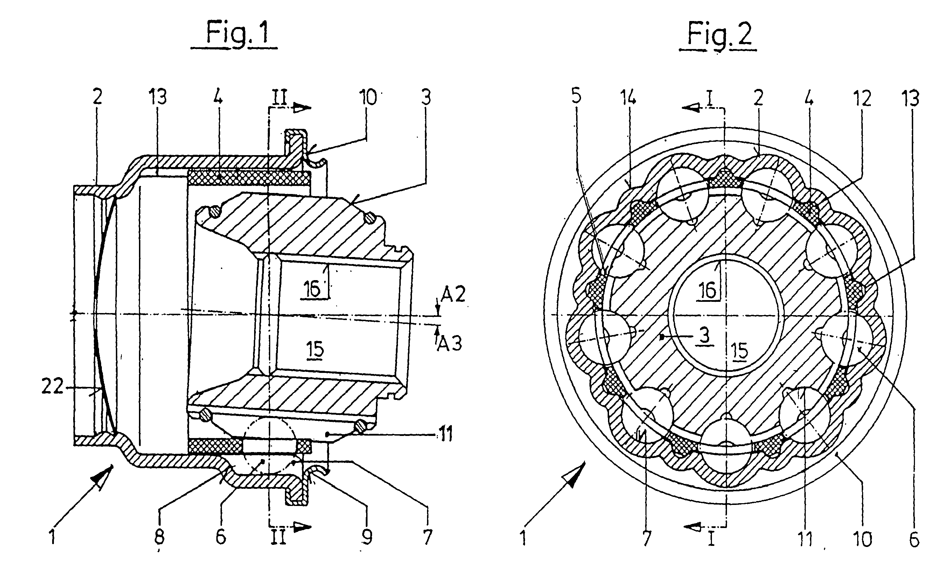

Der Käfig 4 ist in der in den Fig. 1 und 2 gezeigten Ausführungsform mit in radialer Richtung nach außen wegragenden Käfigführungsstegen 12 versehen, welche in entsprechende Zentrierungsnuten 13 der Außennabe 2 eingreifen. Die Zentrierungsnuten 13 der Außennabe 2 sind dabei in den Stegen 14 zwischen den Kugelbahnen 7 ausgebildet. Der Käfig 4 ist damit in axialer Richtung relativ zu der Außennabe 2 und der Innennabe 3 frei verschiebbar geführt.

Die Innennabe 3 des Verschiebegelenks 1 weist eine zentrale Bohrung 15 auf, die zur drehfesten Aufnahme eines nicht dargestellten Wellenzapfens mit einer Steckverzahnung 16 versehen ist. Über die Bohrung 15 mit der Steckverzahnung 16 lässt sich das Verschiebegelenk 1 auch gegenüber dem Wellenzapfen zentrieren.

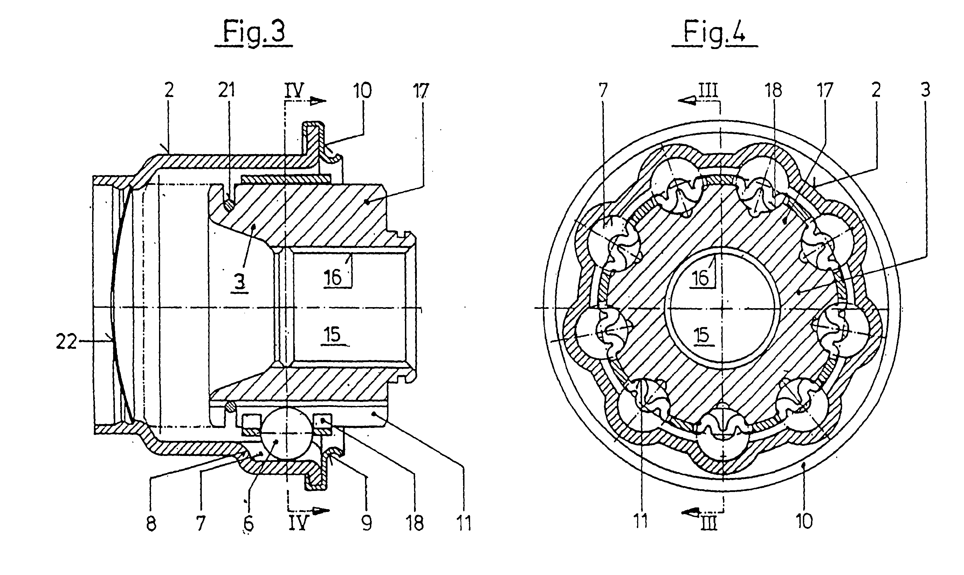

Im Gegensatz zu der in den Fig. 1 und 2 dargestellten Ausführungsform ist bei dem Verschiebegelenk nach den Fig. 3 und 4 der Käfig 4 auf der Innennabe 3 geführt. Hierzu ist der Käfig 4 als ein Faltkäfig ausgebildet, d.h. der Käfig 4 weist, wie in Fig. 4 dargestellt, ein im Querschnitt welliges Profil auf. Dabei liegt der Käfig 4 bereichsweise auf Stegen 17 an der Außenfläche der Innennabe 3 auf, die zwischen den Kugelbahnen 11 der Innennabe 3 gebildet sind. Gleichzeitig ragt der Käfig 4 mit Käfigführungsstegen 18 bereichsweise in die Kugelbahnen 11 der Innennabe 3 hinein, so dass der Käfig 4 verdrehsicher und in axialer Richtung verschiebbar auf der Innennabe 3 geführt ist.

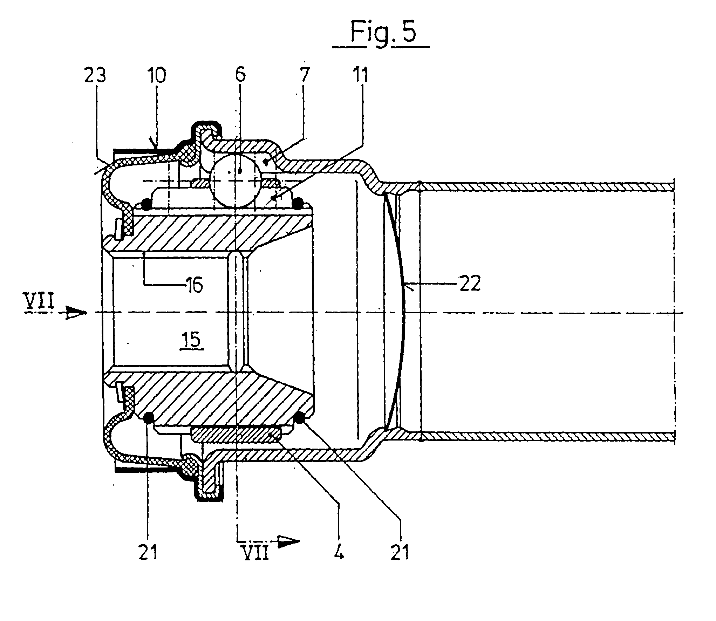

Auch in der in den Fig. 5 bis 7 dargestellten Ausführungsform des Verschiebegelenks 1 ist der Käfig 4 auf der Innennabe 3 geführt. Die Zentrierung des Käfigs 4 auf der Innennabe 3 erfolgt dabei jedoch bei dem ebenfalls als Faltkäfig ausgebildeten Käfig 4 mittels Käfigführungsstegen 19, die in entsprechende Zentrierungsnuten 20 eingreifen, die in den Stegen 17 zwischen den Kugelbahnen 11 der Innennabe 3 ausgebildet sind.

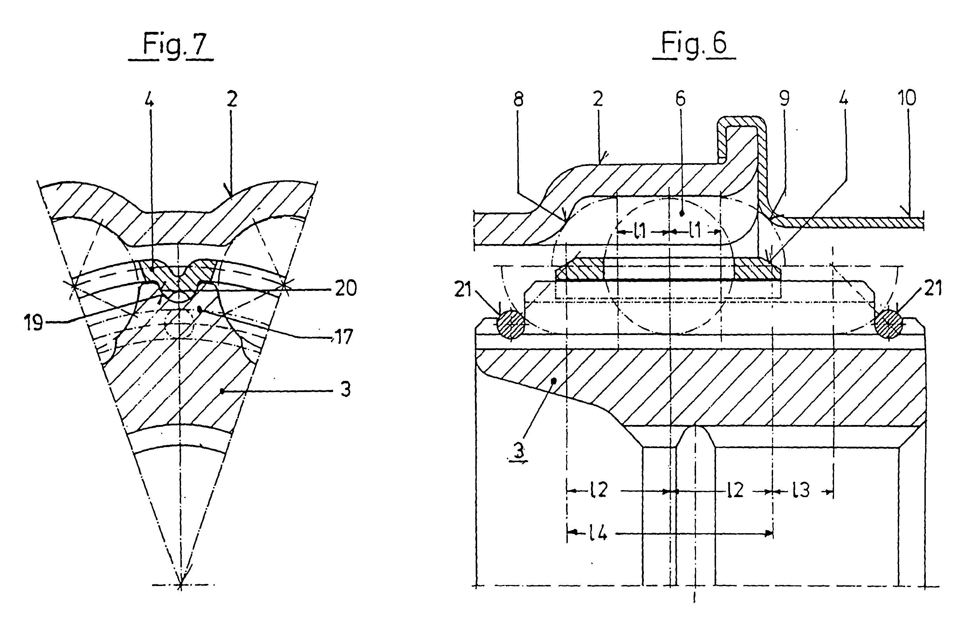

Wie insbesondere aus der Detailansicht von Fig. 6 hervorgeht, ist die Bewegung der Kugeln 6 nicht nur durch die Anschläge 8 und 9 in der Außennabe 2 begrenzt, sondern es ist auch auf der Innennabe 3 in den Kugelbahnen 11 wenigstens ein Sprengring 21 eingebracht, der verhindert, dass die Kugeln 6 in axialer Richtung aus den Kugelbahnen 11 der Innennabe 3 heraustreten. Der Abstand der Sprengringe 21 zueinander ist dabei größer als der Abstand der beiden Anschläge 8 und 9 in der Außennabe 2 des Verschiebegelenks 1.

Die Kugeln 6 sind derart in den Kugelbahnen 7 und 11 aufgenommen, dass sie auf ihrer in Fig. 6 dargestellten mittleren Position zwischen den beiden Anschlägen 8 und 9 unter gleichzeitiger Verschiebung der Innennabe 3 relativ zu der Außennabe 2 rollen können. Der Mittelpunkt der Kugeln 6 kann dabei aus der in Fig. 6 gezeigten Stellung beim Abrollen der Kugeln 6 um die Strecke I₁ nach links oder rechts bewegt werden, bevor die Kugeln 6 an einem der Anschläge 8 bzw. 9, wie in Fig. 6 gestrichelt angedeutet, anschlagen. Die Innennabe 3 verschiebt sich dabei in axialer Richtung relativ zu der Außennabe 2 um die Strecke I₂, die doppelt so groß wie die Strecke I₁ ist, so dass die Strecke I₄, um welche die Innennabe 3 zu der Außennabe 2 durch Abrollen der Kugeln 6 verschoben werden kann, das Doppelte der Strecke I₂ beträgt.

Wenn die Innennabe 3 relativ zu der Außennabe 2 in der Fig. 6 nach rechts bewegt wird, stößt die Kugel 6 außen an dem Anschlag 9 an und liegt dabei gleichzeitig an dem in Fig. 6 linken Sprengring 21 der Innennabe 3 an. Eine weitere Relativbewegung zwischen der Innennabe 3 und der Außennabe 2 wird auf diese Weise verhindert. In der umgekehrten Richtung stößt bei einer Bewegung der Innennabe 3 nach links in Fig. 6 die Kugel 6 zunächst an den Anschlag 8 der Außennabe 2 an. Die Kugel 6 liegt dabei jedoch noch nicht an dem in Fig. 6 rechten Sprengring 21 der Innennabe 3 an. Dadurch ist es möglich, die Innennabe 3 relativ zu der Außennabe 2 selbst dann weiter nach links in Fig. 6 zu verschieben, wenn die Kugel 6 bereits an dem Anschlag 8 in der Außennabe 2 anliegt. Bei diesem weiteren Verschieben der Innennabe 3 relativ zu der Außennabe 2 kann die Kugel 6 jedoch nicht mehr in den Kugelbahnen 7 bzw. 11 abrollen, da sie bereits außen an dem Anschlag 8 anliegt. Die weitere Verschiebung der Innennabe 3 zu der Außennabe 2 erfolgt daher, indem die Kugel 6 in der Kugelbahn 11 der Innennabe 3 gleitet, bis die Kugel 6 an den in Fig. 6 rechten Sprengring 21 der Innennabe 3 anstößt. Diese zusätzliche Strecke, die die Innennabe 3 relativ zu der Außennabe 2 in axialer Richtung verschoben werden kann, wenn die Kugel 6 bereits einem Anschlag 8 der Außennabe 2 anliegt, ist in Fig. 6 mit I₃ gekennzeichnet.

In Betrieb rollt die Kugel 6 in den Kugelbahnen 7 bzw. 11 bei axialen Verschiebungen um +/- I₂ aus der in Fig. 6 dargestellten mittleren Stellung der Innennabe 3 relativ zu der Außennabe 2, so dass der Verschiebewiderstand minimiert wird. Für die Montage des Verschiebegelenks 1 kann die Innennabe 3 jedoch zusätzlich in axialer Richtung um die Strecke I₃ relativ zu der Außennabe 2 verschoben werden, wobei die Kugel 6 in der Kugelbahn 11 der Innennabe 3 gleitet.

Die Außennabe 2 ist vorzugsweise als ein Blechumformteil gebildet, d.h. die Kugelbahnen 7 sowie ggf. die Zentrierungsnuten 13 werden spanlos in die Außennabe 2 eingebracht. Auch in der Innennabe 3 können die Kugelbahnen 11 und/oder die in der Bohrung 15 vorgesehene Steckverzahnung 16 spanlos, bspw. in einem Prägeverfahren, eingebracht werden.

Als Materialien für den Käfig 4 eignet sich bspw. Kunststoff oder Stahlblech.

Zur Abdichtung des Verschiebegelenks 1 kann in der Außennabe 2 ein Schutzblech 22 vorgesehen sein. Weiter ist es möglich, das Verschiebegelenk 1 auf der dem Schutzblech 22 gegenüberliegenden Seite mit einem Faltenbalg 23, der von dem Faltenbalgträger 10 an der Außennabe 2 befestigt ist, nach außen abzudichten.

Das Verschiebegelenk 1 eignet sich insbesondere als Kleinstwinkelverschiebegelenk für geringe Beugewinkel zwischen der Außennabe 2 und der Innennabe 3. Die Betriebsbeugewinkel sollten dabei so gewählt werden, dass eine Selbsthemmung nicht auftritt.

### Bezugszeichenliste

- 1: Verschiebegelenk
- 2: Außennabe
- 3: Innennabe
- 4: Käfig
- 5: Fenster im Käfig 4
- 6: Kugel
- 7: Kugelbahn in der Außennabe 2
- 8: Anschlag
- 9: Anschlag
- 10: Faltenbalgträger
- 11: Kugelbahn der Innennabe 3
- 12: Käfigführungssteg
- 13: Zentrierungsnut
- 14: Steg der Außennabe 2
- 15: zentrale Bohrung der Innennabe 3
- 16: Steckverzahnung
- 17: Steg der Innennabe 3
- 18: Käfigführungssteg
- 19: Käfigführungssteg
- 20: Zentrierungsnut in der Innennabe 3
- 21: Sprengring
- 22: Schutzblech
- 23: Faltenbalg

- A₂: Achse der Außennabe 2
- A₃: Achse der Innennabe 3
- I₁: Verschiebestrecke des Mittelpunkts der Kugel 6
- I₂: Verschiebestrecke der Innennabe 3 zu der Außennabe 2 (= 2 mal I₁)
- I₃: weitere Strecke zum Verschieben der Innennabe 3 relativ zu der Außennabe 2
- I₄: Gesamtverschiebestrecke der Außennabe 2 relativ zu der Innennabe 3 bei Abrollen der Kugel 6 (2 mal I₂)

## Patentansprüche

1. Verschiebegelenk mit einer Außennabe (2), die einen Hohlraum umschließt und in ihrer Innenfläche Kugelbahnen (7) aufweist, die sich parallel zu der Achse (A₂, A₃) des Verschiebegelenks (1) erstrecken, einer in dem Hohlraum aufgenommenen Innennabe (3), die auf ihrer Außenfläche sich parallel zu der Achse (A₂, A₃) des Verschiebegelenks (1) erstreckende Kugelbahnen (11) aufweist, welche den Kugelbahnen (7) der Außennabe (2) gegenüberliegen und gemeinsam mit diesen paarweise jeweils eine Kugel (6) aufnehmen, und mit einem zwischen der Außennabe (2) und der Innennabe (3) angeordneten Käfig (4), der die Kugeln (6) in axialer Richtung führt, wobei die Innennabe (3) relativ zu der Außennabe (2) In axialer Richtung um eine erste Strecke (I₄) durch Abrollen der Kugeln (6) in den Kugelbahnen (7, 11) zwischen einem ersten Anschlag (8) und einem zweiten Anschlag (9, 21) frei verschiebbar ist und um eine weitere Strecke (I₃) durch Gleiten der Kugeln (6) in den Kugelbahnen (7, 11) verschiebbar ist, wobei der Käfig (4) relativ zu der Innennabe (3) und relativ zu der Außennabe (2) in axialer Richtung frei verschiebbar ist, **dadurch gekennzeichnet, dass** die erste Strecke (I₄) durch Anschlagen der Kugeln (6) in den Kugelbahnen (7, 11) an den ersten Anschlag (8) und den zweiten Anschlag (9, 21) begrenzt wird.

2. Verschiebegelenk nach Anspruch 1, **dadurch gekennzeichnet, dass** die Außennabe (2) ein Blechumformteil ist, in der die Kugelbahnen (7) spanlos eingebracht sind.

3. Verschiebegelenk nach einem der vorhergehenden Ansprüche, **dadurch gekennzeichnet, dass** die Innennabe (3) eine zentrale Bohrung (15) mit einer Steckverzahnung (16) aufweist.

4. Verschiebegelenk nach einem der vorhergehenden Ansprüche, **dadurch gekennzeichnet, dass** die beiden die erste Strecke (I₄), in der die Kugeln (6) in den Kugelbahnen (7, 11) rollen, begrenzenden Anschläge (8, 9) durch die Enden der Kugelbahnen (7) der Außennabe (2) gebildet werden.

5. Verschiebegelenk nach einem der vorhergehenden Ansprüche, **dadurch gekennzeichnet, dass** die beiden die erste Strecke (I₄), in der die Kugeln (6) in den Kugelbahnen (7, 11) rollen, begrenzenden Anschläge durch wenigstens einen in die Kugelbahnen (11) der Innennabe (3) eingesetzten Sprengring (21) gebildet werden.

6. Verschiebegelenk nach einem der vorhergehenden Ansprüche, **dadurch gekennzeichnet, dass** der Käfig (4) ein Faltkäfig ist, der auf der Innennabe (3) geführt ist.

## Claims

1. A sliding articulation comprising an outer hub (2) which encloses a cavity and has raceways (7) in its inner surface, said raceways extending parallel to the axis (A₂, A₃) of the sliding articulation (1), an inner hub (3) which is accommodated in the cavity and has raceways (11) on its outer surface which raceways extend parallel to the axis (A₂, A₃) of the sliding articulation (1), said raceways lying opposite to the raceways (7) of the outer hub (2) and, as a pair together with the latter, accommodate in each case one ball (6), and a cage (4) arranged between the outer hub (2) and the inner hub (3), which cage guides the balls (6) in the axial direction, wherein the inner hub (3) is freely displaceable relative to the outer hub (2) in the axial direction between a first stop (8) and a second stop (9, 21) over a first distance (I₄) by rolling the balls (6) in the raceways (7, 11), and is displaceable over a further distance (I₃) by sliding the balls (6) in the raceways (7, 11), wherein the cage (4) is freely displaceable in the axial direction relative to the inner hub (3) and relative to the outer hub (2), **characterized in that** the first distance (I₄) is delimited by the balls(6) abutting in the raceways (7, 11) against the first stop (8) and the second stop (9, 21).

2. The sliding articulation according to claim 1, **characterized in that** the outer hub (2) is a shaped sheet metal part into which the raceways (7) are worked without cutting.

3. The sliding articulation according to any one of the preceding claims, **characterized in that** the inner hub (3) has a central bore (15) having a plug-in tooth system (16).

4. The sliding articulation according to any one of the preceding claims, **characterized in that** the two stops (8, 9) delimiting the first distance (I₄) in which the balls (6) roll in the raceways (7, 11) are formed by the ends of the raceways (7) of the outer hub (2).

5. The sliding articulation according to any one of the preceding claims, **characterized in that** the two stops delimiting the first distance (I₄) in which the balls (6) roll in the raceways (7, 11) are formed by at least one snap ring (21) inserted into the raceways (11) of the inner hub (3).

6. The sliding articulation according to any one of the preceding claims, **characterized in that** the cage (4) is a folding cage which is guided on the inner hub (3).

## Revendications

1. Articulation coulissante comportant un bossage extérieur (2), qui définit un espace creux et présente dans sa surface intérieure des pistes de billes (7), qui s'étendent parallèlement à l'axe (A₂, A₃) de l'articulation coulissante (1), un bossage intérieur (3) renfermé dans l'espace creux, qui présente sur sa surface extérieure des pistes de billes (11) s'étendant parallèlement à l'axe (A₂, A₃) de l'articulation coulissante (1), auxquelles les pistes de billes (7) du bossage extérieur (2) font face et renferment respectivement une bille (6) par paires en commun avec celles-ci, et comportant une cage (4) disposée entre le bossage extérieur (2) et le bossage intérieur (3), qui guide les billes (6) dans la direction axiale, dans laquelle le bossage intérieur (3)est déplaçable librement relativement au bossage extérieur (2) dans la direction axiale autour d'un premier tronçon (I₄) par roulement des billes (6) dans les pistes de billes (7, 11) entre une première butée (8) et une deuxième butée (9, 21) et est déplaçable autour d'un autre tronçon (I₃) par glissement des billes (6) dans les pistes de billes (7, 11), dans laquelle la cage (4) est déplaçable librement dans la direction axiale relativement au bossage intérieur (3) et relativement au bossage extérieur (2), **caractérisée en ce que** le premier tronçon (I₄) est délimité par la butée des billes (6) dans les pistes de billes (7, 11) sur la première butée (8) et la deuxième butée (9, 21).

2. Articulation coulissante selon la revendication 1, **caractérisée en ce que** le bossage extérieur (2) est une pièce façonnée en tôle, dans laquelle les pistes de billes (7) sont ménagées sans enlèvement de copeaux.

3. Articulation coulissante selon une des revendications précédentes, **caractérisée en ce que** le bossage intérieur (3) présente un alésage central (15) comportant une cannelure (16).

4. Articulation coulissante selon une des revendications précédentes, **caractérisée en ce que** les deux butées (8, 9) délimitent le premier tronçon (I₄), dans lequel les billes (6) roulent dans les pistes de billes (7, 11), sont formées par les extrémités des pistes de billes (7) du bossage extérieur (2).

5. Articulation coulissante selon une des revendications précédentes, **caractérisée en ce que** les deux butées délimitant le premier tronçon (I₄), dans lequel les billes (6) roulent dans les pistes de billes (7, 11) sont formées par au moins un circlip (21) inséré dans les pistes de billes (11) du bossage intérieur (3).

6. Articulation coulissante selon une des revendications précédentes, **caractérisée en ce que** la cage (4) est une cage pliable, qui est guidée sur le bossage intérieur (3).
